# EUROPEAN PATENT APPLICATION

(11) **EP 3 454 181 A1**
(43) Date of publication of application: **13.03.2019**
(21) Application number: 18191844.2
(22) Date of filing: 30.08.2018
(51) Int. Cl.: G06F 3/01

(54) **HAPTIC ACTUATION SYSTEMS FOR A TOUCH SURFACE**

(30) Priority: 08.09.2017 US 201715699784
(71) Applicant: Immersion Corporation, San Jose, CA 95134 (US)
(72) Inventor: ALGHOONEH, Mansoor, Montreal, Québec H2W 2R2 (CA); KHOSHKAVA, Vahid, Montreal, Québec H2W 2R2 (CA); CRUZ-HERNANDEZ, Juan Manuel, Montreal, Québec H2W 2R2 (CA); OLIEN, Neil T., Montreal, Québec H2W 2R2 (CA); LACROIX, Robert A., Montreal, Québec H2W 2R2 (CA)
(74) Representative: McDougall, Robert Campbell

(57) **Abstract**

One illustrative system disclosed herein includes a computing device (101) with a haptic actuation element (118) coupled to a touch surface (116, 206, 305, 402, 502) of the computing device (101) and an inner surface (205, 307, 404, 508) of a housing of the computing device. The touch surface is connected to the housing via a coupler. The haptic actuation element includes a first magnetic element (202, 302, 408, 504) coupled to one of the touch surface or the inner surface and a second magnetic element (204, 304, 410, 506) coupled to the other of the touch surface or the inner surface. The second magnetic element is positioned proximate to the first magnetic element to generate attractive or repulsive forces between the magnetic elements. The haptic actuation element also includes an electrical coil (306, 407, 510, 702, 802, 804) disposed around one or both of the first or second magnetic elements and the electrical coil can receive a current and generate an electromagnetic force between the magnetic elements based on the current to output a haptic effect to the touch surface.

## Description

### Field of Invention

The present disclosure relates generally to user interface devices. More specifically, but not by way of limitation, this disclosure relates to haptic actuation systems for a touch surface.

### Background

Many modern devices can include a touch surface (e.g., a touchpad) that can be used to provide input to the device or interact with one or more objects displayed by the device (e.g., by touching or clicking the touch sensitive surface). However, some such touch surfaces may lack haptic feedback capabilities.

### Summary

Various embodiments of the present disclosure provide systems and methods for providing haptic actuation for a touch surface.

In a first aspect there is presented, a system of the present disclosure which may comprise a touch surface coupled to a housing of a computing device via a coupler. The system can also include a haptic actuation element coupled to the touch surface and an inner surface within the housing of the computing device. The haptic actuation element can be configured to output a haptic effect to the touch surface. The haptic actuation element includes a first magnetic element coupled to one of the touch surface or the inner surface. The haptic actuation element also includes a second magnetic element coupled to the other of the touch surface or the inner surface. The second magnetic element is positioned opposite to the first magnetic element to generate an attractive or repulsive force between the first and second magnetic elements. The haptic actuation element also includes an electrical coil disposed around one or both of the first or second magnetic elements. The electrical coil is configured to receive a current and generate an electromagnetic force between the first and second magnetic elements based on the current to output the haptic effect to the touch surface.

The first aspect may be modified in any suitable way disclosed herein, including, but not limited to any one or more of the following optional features.

The haptic actuation element may further comprise a haptic actuator coupled to the touch surface, the haptic actuator configured to receive a haptic signal from a processor of the computing device and drive the touch surface in a vertical or horizontal direction in response to the haptic signal to output the haptic effect to the touch surface. The haptic actuator may include a linear resonant actuator (LRA), solenoid resonance actuator (SRA), or a piezoelectric actuator.

The haptic actuation element may comprise: a first haptic actuation element coupled to a first portion of the touch surface, the first haptic actuation element configured to receive a first haptic signal associated with a first haptic effect and output the first haptic effect to the first portion of the touch surface; and, a second haptic actuation element coupled to a second portion of the touch surface, the second haptic actuation element configured to receive a second haptic signal associated with a second haptic effect and output the second haptic effect to the second portion of the touch surface.

The system may further comprise: a memory; and, a processor communicatively coupled to the memory and the touch surface, the processor configured to: receive a signal associated with a contact on the touch surface; determine the haptic effect based on the signal; and, transmit a haptic signal associated with the haptic effect to the haptic actuation element, the haptic signal including the current, wherein the touch surface comprises a touch sensor configured to detect the contact on the touch surface, the touch sensor further configured to transmit the signal associated with the contact on the touch surface to the processor. The touch sensor may be further configured to detect a pressure of the contact and transmit data associated with the pressure to the processor, and wherein the processor is configured to determine a characteristic of the haptic effect based at least in part on the data associated with the pressure of the contact. The coupler may be configured to vary a natural frequency of the touch surface. The coupler may be deformable and include at least one of a spring, tape, Poron®, VHB™ tape, silicon tape, silicone, or rubber. The electrical coil may comprise a first electrical coil disposed around the first magnetic element and a second electrical coil disposed around the second magnetic element.

In a second aspect there is presented, a method of the present disclosure which may comprise: detecting a contact on a touch surface, the touch surface coupled to a housing of a computing device via a coupler; receiving, by a processor, a sensor signal associated with the contact; determining, by the processor, a haptic effect based on the sensor signal; and transmitting, by the processor, a haptic signal associated with the haptic effect to a haptic actuation element coupled to the touch surface and an inner surface within the housing. The haptic actuation element includes a first magnetic element coupled to one of the touch surface or the inner surface. The haptic actuation element also includes a second magnetic element coupled to the other of the touch surface or the inner surface. The second magnetic element is positioned opposite to the first magnetic element to generate an attractive or repulsive force between the first and second magnetic elements. The haptic actuation element also includes a first electrical coil disposed around one or both of the first or second magnetic elements. The first electrical coil is configured to receive a current and generate an electromagnetic force between the first and second magnetic elements based on the current to output the haptic effect to the touch surface. The method can also include outputting, by the haptic actuation element, the haptic effect to the touch surface.

The second aspect may be modified in any suitable way disclosed herein, including, but not limited to any one or more of the following optional features.

The method may be configured such that the coupler is configured to vary a natural frequency of the touch surface. The method may be configured such that the haptic actuation element comprises: a first haptic actuation element coupled to a first portion of the touch surface, the first haptic actuation element configured to receive a first haptic signal associated with a first haptic effect and output the first haptic effect to the first portion of the touch surface; and, a second haptic actuation element coupled to a second portion of the touch surface, the second haptic actuation element configured to receive a second haptic signal associated with a second haptic effect and output the second haptic effect to the second portion of the touch surface. The method may be configured such that the coupler is deformable and includes at least one of a spring, tape, Poron®, VHB™ tape, silicon tape, silicone, or rubber. The method may be configured such that the first electrical coil is disposed around the first magnetic element and further comprising a second electrical coil disposed around the second magnetic element.

In a third aspect there is presented, a system of the present disclosure which may comprise a touch surface coupled to a housing of a computing device. The system can also include a haptic actuation element coupled to the touch surface and an inner surface within the housing of the computing device. The haptic actuation element can be configured to output a haptic effect to the touch surface. The haptic actuation element can include a magnet coupled to one of the touch surface or the inner surface. The haptic actuation element can also include a magnetic element coupled to the other of the touch surface or the inner surface. The magnetic element is positioned proximate the magnet to repel the magnet. The haptic actuation element also includes a haptic actuator coupled to the touch surface. The haptic actuator is configured to receive a haptic signal and output the haptic effect to the touch surface.

The third aspect may be modified in any suitable way disclosed herein, including, but not limited to any one or more of the following optional features.

The system may be configured such that the haptic actuation element further comprises an electrical coil disposed around one or both of the magnet or the magnetic element, wherein the electrical coil is configured to receive a current and generate a repulsive force between the magnet and the magnetic element. The system may be configured such that the haptic actuation element comprises: a first haptic actuation element coupled to a first portion of the touch surface, the first haptic actuation element configured to receive a first haptic signal associated with a first haptic effect and output the first haptic effect to the first portion of the touch surface; and, a second haptic actuation element coupled to a second portion of the touch surface, the second haptic actuation element configured to receive a second haptic signal associated with a second haptic effect and output the second haptic effect to the second portion of the touch surface. The system may further comprise: a memory; and, a processor communicatively coupled to the memory and the touch surface, the processor configured to: receive a signal associated with a contact on the touch surface; determine the haptic effect based on the signal; and, transmit the haptic signal associated with the haptic effect to the haptic actuation element. The system may be configured such that the touch surface comprises a touch sensor configured to detect the contact on the touch surface, the touch sensor further configured to transmit the signal associated with the contact on the touch surface to the processor. The system may be configured such that the touch sensor is further configured to detect a pressure of the contact and transmit data associated with the pressure to the processor, and wherein the processor is configured to determine a characteristic of the haptic effect based at least in part on the data associated with the pressure of the contact.

These illustrative embodiments are mentioned not to limit or define the limits of the present subject matter, but to provide examples to aid understanding thereof. Illustrative embodiments are discussed in the Detailed Description, and further description is provided there. Advantages offered by various embodiments may be further understood by examining this specification and/or by practicing one or more embodiments of the claimed subject matter.

### Brief Description of the Drawings

A full and enabling disclosure is set forth more particularly in the remainder of the specification. The specification makes reference to the following appended figures.
Figure 1 is a block diagram showing a system for providing haptic actuation for a touch sensitive surface according to one embodiment.
Figure 2 shows an embodiment of a haptic actuation system for a touch sensitive surface according to one embodiment.
Figure 3 shows another embodiment of a haptic actuation system for a touch sensitive surface according to another embodiment.
Figure 4 shows another embodiment of a haptic actuation system for a touch sensitive surface according to another embodiment.
Figure 5 shows another embodiment of a haptic actuation system for a touch sensitive surface according to another embodiment.
Figure 6 is a flow chart of steps for performing a method for providing haptic actuation for a touch sensitive surface according to one embodiment.
Figure 7 shows another embodiment of a haptic actuation system for a touch sensitive surface according to another embodiment.
Figure 8 shows another embodiment of a haptic actuation system for a touch sensitive surface according to another embodiment.

### Detailed Description

Reference now will be made in detail to various and alternative illustrative embodiments and to the accompanying drawings. Each example is provided by way of explanation and not as a limitation. It will be apparent to those skilled in the art that modifications and variations can be made. For instance, features illustrated or described as part of one embodiment may be used in another embodiment to yield a still further embodiment. Thus, it is intended that this disclosure includes modifications and variations that come within the scope of the appended claims and their equivalents.

### Illustrative Examples of a Haptic Actuation System for a Touch Sensitive Surface

One illustrative embodiment of the present disclosure comprises a computing device, such as a personal computer or a smartphone. The computing device comprises a touch sensitive surface (e.g., a touchpad), a memory, a haptic output device, and a processor in communication with each of these elements.

In the illustrative embodiment, a user of the computing device may contact or touch the touch sensitive surface (e.g., with the user's skin or an object) to provide user input to the computing device. The touch sensitive surface may include one or more components such as, for example, sensors, that can detect the contact or touch on the touch sensitive surface and transmit a signal to the processor, which determines a haptic effect based at least in part on the contact or touch. As an example, the user can click on the touch sensitive interface to select an object displayed by the computing device via a display of the computing device. The touch sensitive surface may transmit a signal to the processor indicating the click on the touch sensitive surface and the processor can determine a haptic effect associated with the user clicking on the object. The haptic effect can include, for example, a deformation of the touch sensitive surface, which can allow the user to perceive clicking on the object.

In the illustrative embodiment, the processor is configured to transmit a haptic signal associated with the haptic effect to the haptic output device and the haptic output device is configured to output the haptic effect. In this illustrative embodiment, the haptic output device is coupled to the touch sensitive surface to output the haptic effects to the touch sensitive surface. As an example, the haptic output device can be coupled to a surface of the touch sensitive surface or be a portion of the touch sensitive surface. In one illustrative embodiment, the haptic output device can include a first magnet attached to the touch sensitive surface and a second magnet positioned near or proximate the touch sensitive surface (e.g., attached to another portion of the computing device beneath or opposite to the first magnet). A magnetic pole of the first magnet can correspond to a magnetic pole of the second magnet. For example, the north pole of the first magnet can be aligned with the north pole of the second magnet, which may induce a repelling force in the first and second magnets. The repelling force can drive the touch sensitive surface upward and the user can perceive a haptic effect as the user contacts or touches the touch sensitive surface (e.g., as the user presses down on the touch sensitive surface). As another example, the haptic output device can also include a haptic actuator (e.g., a solenoid resonance actuator or a linear resonant actuator). The haptic actuator can output one or more haptic effects to the touch sensitive surface after a repelling force is generated between the first and second magnets and the user can perceive the haptic effect as the user contacts or touches the touch sensitive surface.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative examples but, like the illustrative examples, should not be used to limit the present disclosure.

### Illustrative Systems for Providing Haptic Actuation

### For a Touch Sensitive Surface

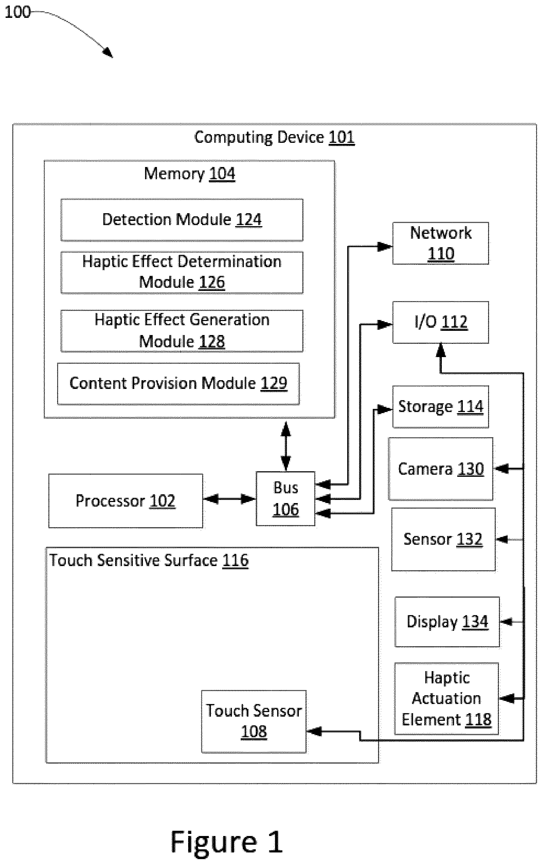

Figure 1 is a block diagram showing a system 100 for providing haptic actuation for a touch sensitive surface (e.g., a touchpad) according to one embodiment. In the embodiment depicted in Figure 1, the system 100 comprises a computing device 101 having a processor 102 in communication with other hardware via a bus 106. The computing device 101 may comprise, for example, a personal computer, a mobile device (e.g., a smartphone), tablet, e-reader, smartwatch, a head-mounted display, glasses, a wearable device, etc. In some embodiments, the computing device 101 may include all or some of the components depicted in Figure 1.

A memory 104, which can comprise any suitable tangible (and non-transitory) computer-readable medium such as random access memory ("RAM"), read-only memory ("ROM"), erasable and programmable read-only memory ("EEPROM"), or the like, embodies program components that configure operation of the computing device 101. In the embodiment shown, computing device 101 further includes one or more network interface devices 110, input/output (I/O) interface components 112, and storage 114.

Network interface device 110 can represent one or more of any components that facilitate a network connection. Examples include, but are not limited to, wired interfaces such as Ethernet, USB, IEEE 1394, and/or wireless interfaces such as IEEE 802.11, Bluetooth, or radio interfaces for accessing cellular telephone networks (e.g., transceiver/antenna for accessing a CDMA, GSM, UMTS, or other mobile communications network).

I/O components 112 may be used to facilitate wired or wireless connections to devices such as one or more displays 134, game controllers, keyboards, mice, joysticks, cameras, buttons, speakers, microphones and/or other hardware used to input or output data. Storage 114 represents nonvolatile storage such as magnetic, optical, or other storage media included in computing device 101 or coupled to the processor 102.

In some embodiments, the computing device 101 includes a touch sensitive surface 116 (e.g., a touchpad). In some embodiments, the touch sensitive surface 116 can be flexible or deformable. Touch sensitive surface 116 represents any surface that can be configured to sense tactile input of a user. One or more touch sensors 108 are configured to detect a touch in a touch area (e.g., when an object contacts the touch sensitive surface 116) and transmit signals associated with the touch to the processor 102. Any suitable number, type, or arrangement of touch sensor 108 can be used. For example, resistive and/or capacitive sensors may be embedded in touch sensitive surface 116 and used to determine the location of a touch and other information, such as pressure, speed, and/or direction. While in this example, the computing device 101 includes a touch sensitive surface 116 that is described as being configured to sense tactile input of a user, the present disclosure is not limited to such configurations. Rather, in other examples, the computing device 101 can include the touch sensitive surface 116 and/or any surface that may not be configured to sense tactile input. For example, a surface of the computing device 101 or a portion of a casing or housing of the computing device 101 may not be configured to sense tactile user input (e.g., a surface or portion that does not include a touch sensor 108).

The touch sensor 108 can additionally or alternatively comprise other types of sensors. For example, optical sensors with a view of the touch sensitive surface 116 may be used to determine the touch position. As another example, the touch sensor 108 may comprise an infrared detector or an infrared emitter for determining the touch position. In some embodiments, touch sensor 108 may be configured to detect multiple aspects of the user interaction or touch in the touch area and incorporate this information into the signal transmitted to the processor 102.

In some embodiments, the computing device 101 comprises a touch-enabled display that combines a touch sensitive surface 116 and a display 134 of the computing device 101. The touch sensitive surface 116 may be overlaid on the display 134, may be the display 134 exterior, or may be one or more layers of material above components of the display 134. In other embodiments, the computing device 101 may display a graphical user interface ("GUI") that includes one or more virtual user interface components (e.g., buttons) on the touch-enabled display and the touch sensitive surface 116 can allow interaction with the virtual user interface components.

The computing device 101 may comprise a camera 130. Although the camera 130 is depicted in Figure 1 as being internal to the computing device 101, in some embodiments, the camera 130 may be external to and in communication with the computing device 101. As an example, the camera 130 may be external to and in communication with the computing device 101 via wired interfaces such as, for example, Ethernet, USB, IEEE 1394, and/or wireless interfaces such as IEEE1 802.11, Bluetooth, or radio interfaces.

In some embodiments, the computing device 101 comprises one or more sensors 132. In some embodiments, the sensor 132 may comprise, for example, gyroscope, an accelerometer, a global positioning system (GPS) unit, a range sensor, a depth sensor, a Bluetooth device, a camera, an infrared sensor, a quick response (QR) code sensor, a pressure sensor, etc. In some embodiments, the sensor 132 is external to the computing device 101 and in wired or wireless communication with the computing device 101.

In some embodiments, the system 100 further includes haptic actuation element 118 in communication with the processor 102. In some embodiments, the haptic actuation element 118 may overlay a surface of the computing device 101, be disposed within the computing device 101, be a portion of a housing of the computing device 101, be beneath a surface of a component of the computing device 101, or any combination of these. The haptic actuation element 118 is configured to output a haptic effect in response to a haptic signal. For example, the haptic actuation element 118 can output a haptic effect in response to a haptic signal from the processor 102. In some embodiments, haptic actuation element 118 is configured to output a haptic effect comprising, for example, a vibration, a squeeze, a poke, a change in a perceived coefficient of friction, a simulated texture, a stroking sensation, an electro-tactile effect, a surface deformation (e.g., a deformation of a surface associated with the computing device 101), and/or a puff of a solid, liquid, or gas. In some embodiments, the haptic actuation element 118 can output the haptic effect to one or more surfaces associated with the computing device 101 (e.g., the touch sensitive surface 116).

Although a single haptic actuation element 118 is shown in Figure 1, some embodiments may use multiple haptic actuation elements 118 of the same or different types to produce haptic effects. The computing device 101 may actuate any combination of the haptic actuation elements 118 in sequence and/or in concert to generate one or more haptic effects. Further, in some embodiments, the haptic actuation element 118 is in communication with the processor 102 and internal to the computing device 101. In other embodiments, the haptic actuation element 118 is external to the computing device 101 and in communication with the computing device 101 (e.g., via wired interfaces such as Ethernet, USB, IEEE 1394, and/or wireless interfaces such as IEEE 802.11, Bluetooth, or radio interfaces). For example, the haptic actuation element 118 may be associated with (e.g., coupled to) a touch sensitive surface 116, which may also be external to the computing device 101 and in communication with the computing device 101 and the haptic actuation element 118 can be configured to receive haptic signals from the processor 102.

In some embodiments, the haptic actuation element 118 is configured to output a haptic effect comprising a vibration. In some embodiments, the haptic actuation element 118 is configured to output a haptic effect modulating the perceived coefficient of friction of a surface associated with the haptic actuation element 118. The haptic actuation element 118 may comprise, for example, one or more of a piezoelectric actuator, an electric motor, an electro-magnetic actuator, a voice coil, a shape memory alloy, an electro-active polymer, a solenoid, an eccentric rotating mass motor (ERM), a linear resonant actuator (LRA), an ultrasonic actuator, a piezo-electric material, a deformation device, an electrostatic actuator, a shape memory material, which includes a metal, polymer, or composite, or a solenoid resonance actuator. In some embodiments, the haptic actuation element 118 comprises fluid configured for outputting a deformation haptic effect (e.g., for bending or deforming a surface associated with the computing device 101). In some embodiments, the haptic actuation element 118 comprises a mechanical deformation device. For example, in some embodiments, the haptic actuation element 118 may comprise an actuator coupled to an arm that rotates a deformation component. The actuator may comprise a piezo-electric actuator, rotating/linear actuator, solenoid, an electroactive polymer actuator, macro fiber composite (MFC) actuator, shape memory alloy (SMA) actuator, and/or other actuator.

Turning to memory 104, modules 124, 126, 128, and 129 are depicted to show how a device can be configured in some embodiments to provide haptic actuation to a touchpad (e.g., the touch sensitive surface 116). In some embodiments, modules 124, 126, 128, and 129 may comprise processor executable instructions that can configure the processor 102 to perform one or more operations. For example, the processor 102 can execute processor executable instructions stored in modules 124, 126, 128, and 129 to perform the operations.

For example, a detection module 124 can configure the processor 102 to monitor the touch sensitive surface 116 via the touch sensor 108 to determine a position of a touch. As an example, the detection module 124 may sample the touch sensor 108 in order to track the presence or absence of a touch and, if a touch is present, to track one or more of the location, path, velocity, acceleration, pressure and/or other characteristics of the touch over time.

In some embodiments, a content provision module 129 configures the processor 102 to provide content (e.g., texts, images, sounds, videos, characters, virtual objects, virtual animations, etc.) to a user (e.g., to a user of the computing device 101). If the content includes computer-generated images, the content provision module 129 is configured to generate the images for display on a display device (e.g., the display 134 of the computing device 101 or another display communicatively coupled to the processor 102). If the content includes video and/or still images, the content provision module 129 is configured to access the video and/or still images and generate views of the video and/or still images for display on the display 134.

In some embodiments, the haptic effect determination module 126 represents a program component that analyzes data to determine a haptic effect to generate. The haptic effect determination module 126 may comprise code that selects one or more haptic effects to output using one or more algorithms or lookup tables. In some embodiments, the haptic effect determination module 126 comprises one or more algorithms or lookup tables usable by the processor 102 to determine a haptic effect.

Particularly, in some embodiments, the haptic effect determination module 126 may determine a haptic effect based at least in part on sensor signals (e.g., sensor signals received by the processor 102 from the touch sensor 108). Further, the haptic effect determination module 126 may determine one or more haptic actuation elements 118 to actuate, in order to generate or output the haptic effect. In another embodiment, the haptic effect determination module 126 may determine a haptic effect based on content provided by the content provision module 129.

In some embodiments, the haptic effect determination module 126 may cause the processor 102 to select or determine a characteristic (e.g., a magnitude, duration, location, type, frequency, etc.) of the haptic effect based at least in part on sensor signals (e.g., sensor signals received by the processor 102 from the touch sensor 108).

In some embodiments, the haptic effect generation module 128 represents programming that causes the processor 102 to generate and transmit haptic signals to a haptic actuation element 118 to generate the selected haptic effect. In some examples, the haptic effect generation module 128 causes the haptic actuation element 118 to generate a haptic effect determined by the haptic effect determination module 126.

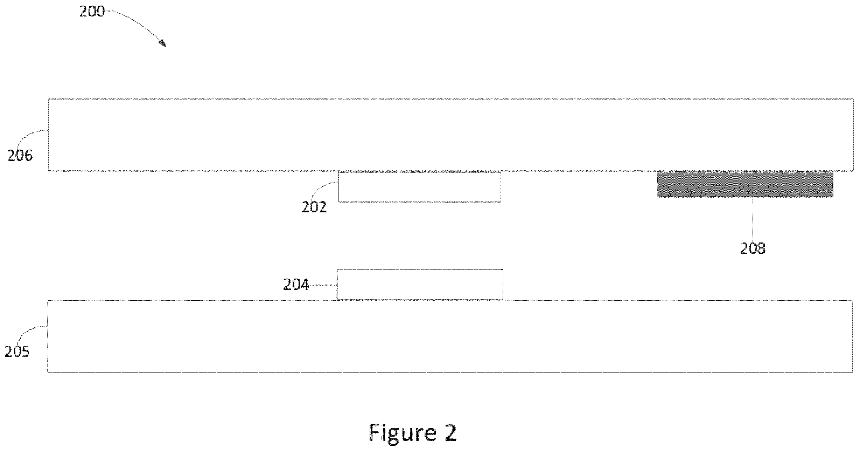

In some embodiments, the haptic actuation element 118 may comprise one or more haptic actuation systems for providing haptic output effects to one or more touch sensitive surfaces associated with the computing device (e.g., the touch sensitive surface 116). For example, Figure 2 shows an embodiment of a haptic actuation system 200 for a touch sensitive surface 206 according to one embodiment. In this example, the touch sensitive surface 206 can be any touch sensitive surface (e.g., the touch sensitive surface 116 of Figure 1). The touch sensitive surface 206 may be coupled to a portion of a computing device (e.g., a surface, casing, housing, or inner portion of the computing device 101 of Figure 1). In some embodiments, the touch sensitive surface 206 can be coupled to the portion of the computing device using any suitable method or technique.

In the example shown in Figure 2, the haptic actuation system 200 includes a haptic actuation element. The haptic actuation element includes a magnetic element 202 and magnetic element 204. In some embodiments, magnetic element 202 and magnetic element 204 can each be any type of magnetic element (e.g., a magnet, a permanent magnet, an electromagnet, a ferromagnetic material, or any magnetic element or material). In some examples, a magnetic element includes a magnet or a ferromagnetic material. In some examples, a magnet includes a permanent magnet or an electromagnet. In some embodiments, magnetic element 202 can be a permanent magnet and magnetic element 204 can be a permanent magnet, an electromagnet, or any magnetic element. In some embodiments, the magnetic element 202 can be coupled to the touch sensitive surface 206. For example, the magnetic element 202 can be coupled to the touch sensitive surface 206 via any suitable method or technique. As an example, the magnetic element 202 can be coupled to touch sensitive surface 206 using bonding, molding, or embedding techniques.

In some embodiments, the magnetic element 204 can be coupled to an inner surface 205 of the computing device associated with the touch sensitive surface 206. For example, the inner surface 205 can be an inner casing, housing, or portion of the computing device. In some embodiments, the magnetic element 204 can be coupled to the inner surface 205 of the computing device proximate to the touch sensitive surface 206 or the magnetic element 202. As an example, the magnetic element 204 can be coupled to the inner surface 205 of the computing device beneath the touch sensitive surface 206 (e.g., a test bed of the computing device) and opposite the magnetic element 202.

The magnetic element 204 can be positioned proximate to the magnetic element 202 to generate attractive or repulsive magnetic forces or field. For example, the magnetic element 202 and the magnetic element 204 can be positioned or aligned with respect to each other to generate an attractive or repulsive magnetic force or field between the magnetic element 202 and the magnetic element 204. As an example, the north pole of the magnetic element 202 can be aligned with the north pole of the magnetic element 204, which may induce a repelling force between the magnetic element 202 and the magnetic element 204. In some embodiments, the repelling force can drive the magnetic element 202 or the touch sensitive surface 206 in a vertical (e.g., upward) or horizontal (e.g., lateral) direction. In another embodiment, the repelling force between the magnetic element 202 and the magnetic element 204 can cause the touch sensitive surface 206 to float or levitate, which can create a frictionless suspension of the touch sensitive surface 206. In some embodiments, the touch sensitive surface 206 can be coupled to a surface, casing, housing, or inner portion of the computing device, which may partially limit the motion of the touch sensitive surface 206 when the touch sensitive surface 206 is driven in a vertical or horizontal direction or when the repelling force between magnetic element 202 and magnetic element 204 causes the touch sensitive surface 206 to float or levitate.

In some embodiments, the haptic actuation element of the haptic actuation system 200 can also include another haptic actuation element 208, which can be coupled to the touch sensitive surface 206. As an example, the touch sensitive surface 206 can be coupled to a haptic actuation element 208 that is a linear resonant actuator (LRA) or solenoid resonance actuator (SRA). In the example depicted in Figure 2, the magnetic element 202 and the haptic actuation element 208 can be coupled to the touch sensitive surface 206 via any suitable method or technique.

In some embodiments, the haptic actuation element 208 may receive a haptic signal (e.g., from the haptic effect generation module 128 of Figure 1), which may cause the haptic actuation element 208 to drive, displace, shift, adjust or otherwise move the touch sensitive surface 206 in a vertical or horizontal direction to output a haptic effect to the touch sensitive surface 206. For example, the haptic actuation element 208 can be configured to receive the haptic signal and displace the touch sensitive surface 206 up, down, left, or right based on the haptic signal to output the haptic effect (e.g., a vibration, a squeeze, a poke, a change in a perceived coefficient of friction, a simulated texture, a stroking sensation, an electro-tactile effect, a surface deformation, etc.). In some embodiments, the haptic actuation element 208 may drive the touch sensitive surface 206 to output the haptic effect to the touch sensitive surface 206 before or after the magnetic element 202 and the magnetic element 204 generate attractive or repulsive magnetic forces or fields. In some embodiments, the haptic actuation element 208 may be positioned in any position relative to the touch sensitive surface 206 to drive, displace, shift, adjust or otherwise move the touch sensitive surface 206 in a vertical or horizontal direction to output a haptic effect to the touch sensitive surface 206. As an example, the haptic actuation element 208 can be positioned on top of the touch sensitive surface 206 to displace the touch sensitive surface 206 downward.

While in the example depicted in Figure 2, the haptic actuation system 200 includes magnetic element 202 and magnetic element 204, the present disclosure is not limited to such configurations. Rather, in other examples, the haptic actuation system 200 can include any number of magnetic elements that can induce an attractive or a repelling force to output one or more haptic effects to the touch sensitive surface 206. Furthermore, although in Figure 2, the haptic actuation system 200 comprises one haptic actuation element 208, some embodiments may use any number of haptic actuators of the same or different types in sequence and/or in concert to produce haptic effects. Each haptic actuation element 208 can be coupled to a portion of the touch sensitive surface 206. In one such embodiment, each portion of the touch sensitive surface 206 may be associated with at least one haptic actuation element 208. In such embodiments, each haptic actuation element 208 can output a haptic effect to a corresponding portion of the touch sensitive surface 206. As an example, a first haptic actuator can receive a first haptic signal (e.g., from the haptic effect generation module 128 of Figure 1) and output a first haptic effect to a first portion of the touch sensitive surface 206 based on the first haptic signal. A second haptic actuator can receive a second haptic signal and output a second haptic effect to a second portion of the touch sensitive surface 206 based on the second haptic signal. In some embodiments, the first haptic effect and the second haptic effect may be the same or different types of haptic effects. In this manner, one or more haptic actuators may be used to provide similar or different haptic effects to one or more portions of the touch sensitive surface 206.

In some embodiments, the haptic actuation system 200 can include one or more sensors. The sensor can be coupled to the touch sensitive surface 206 and/or the magnetic element 202. The sensor can be configured in substantially the same manner as touch sensor 108 of Figure 1. For example, the sensor can include a touch sensor or a pressure sensor. The sensor may detect a touch on the touch sensitive surface 206 (e.g., when an object contacts the touch sensitive surface 206) and transmit one or more sensor signals associated with a detected touch or other information associated with the detected touch (e.g., a pressure, speed, location and/or direction of the touch). The sensor can transmit the sensor signal to a processor of the computing device (e.g., the processor 102 of Figure 1), which may determine the one or more haptic effects to be output by the haptic actuation system 200 based at least in part on the sensor signal.

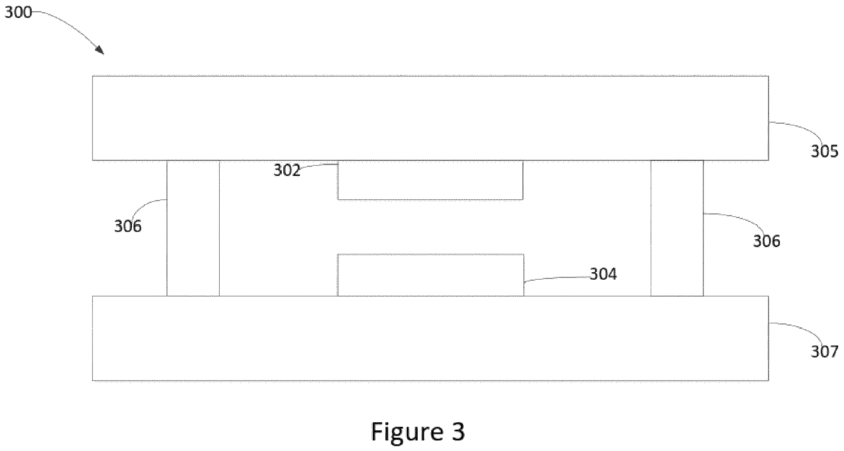

Figure 3 shows another embodiment of a haptic actuation system 300 for a touch sensitive surface 305 according to another embodiment. In this example, the touch sensitive surface 305 can be any touch sensitive surface (e.g., the touch sensitive surface 116 of Figure 1). The touch sensitive surface 305 may be coupled to a portion of a computing device (e.g., a surface, casing, housing, or inner portion of the computing device 101 of Figure 1). In some embodiments, the touch sensitive surface 305 can be coupled to the portion of the computing device using any suitable method or technique.

In the example depicted in Figure 3, the haptic actuation system 300 can include a magnetic element 302 and magnetic element 304, each of which can be configured in substantially the same manner as respective magnetic element 202 and magnetic element 204 of Figure 2. For example, each of magnetic element 302 and magnetic element 304 can be any type of magnetic element (e.g., a magnet, a permanent magnet, an electromagnet, a ferromagnetic material, or any magnetic element or material). In some embodiments, magnetic element 302 can be a permanent magnet and magnetic element 304 can be a permanent magnet, an electromagnet, or any magnetic element. In some embodiments, the magnetic element 302 can be coupled to the touch sensitive surface 305 via any suitable method or technique. The magnetic element 304 can be coupled to an inner surface 307 of the computing device associated with the touch sensitive surface 305 (e.g., an inner portion of the computing device 101 of Figure 1). For example, the magnetic element 304 can be coupled to the inner surface 307 of the computing device that is a surface, casing, housing, or inner portion of the computing device. In some embodiments, the magnetic element 304 can be coupled to the inner surface 307 of the computing device proximate to or opposite from the touch sensitive surface 305 or the magnetic element 302. As an example, the magnetic element 304 can be coupled to an internal portion of the computing device beneath the touch sensitive surface 305 (e.g., a test bed of the computing device) and opposite to the magnetic element 302. The magnetic element 302 can be positioned proximate to the magnetic element 304 to generate attractive or repulsive magnetic forces or fields. For example, the magnetic element 302 and the magnetic element 304 can be positioned or aligned with respect to each other to generate attractive or repulsive magnetic forces or fields between the magnetic element 302 and the magnetic element 304. As an example, the north pole of the magnetic element 302 can be aligned with the north pole of the magnetic element 304, which may induce a repelling force between the magnetic element 302 and the magnetic element 304 and create a space or gap between the magnetic element 302 and the magnetic element 304 or between the touch sensitive surface 305 and the inner surface 307. As another example, the north pole of the magnetic element 302 can be aligned with the south pole of the magnetic element 304, which may induce an attractive force between the magnetic element 302 and the magnetic element 304.

In some embodiments, the haptic actuation element of the haptic actuation system 300 can also include a coil 306, which can be a voice coil. In some embodiments, magnetic element 302 and magnetic element 304 can each be positioned proximate to the coil 306. In the embodiment depicted in Figure 3, the coil 306 is wrapped or positioned around magnetic element 302 and magnetic element 304. In some embodiments, the coil 306 may be positioned or wrapped around one of magnetic element 302 or magnetic element 304. In another embodiment, the haptic actuation system 300 can include a first coil that can be positioned or wrapped around magnetic element 302 and a second coil that can be positioned or wrapped around magnetic element 304.

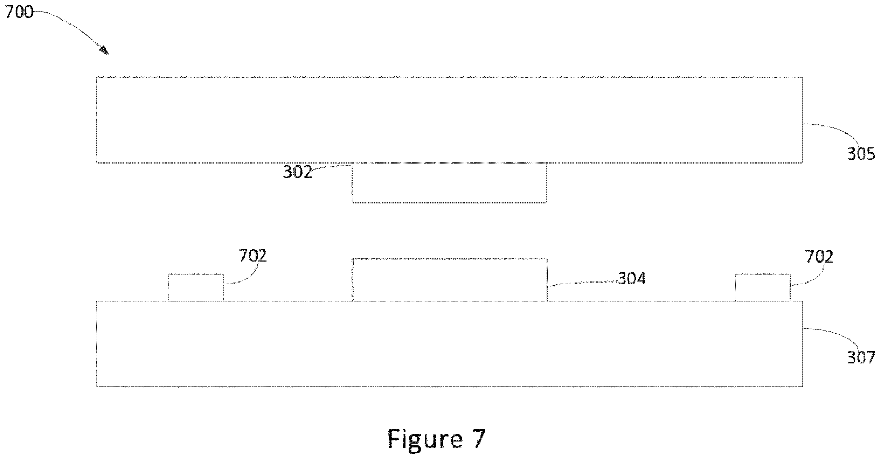

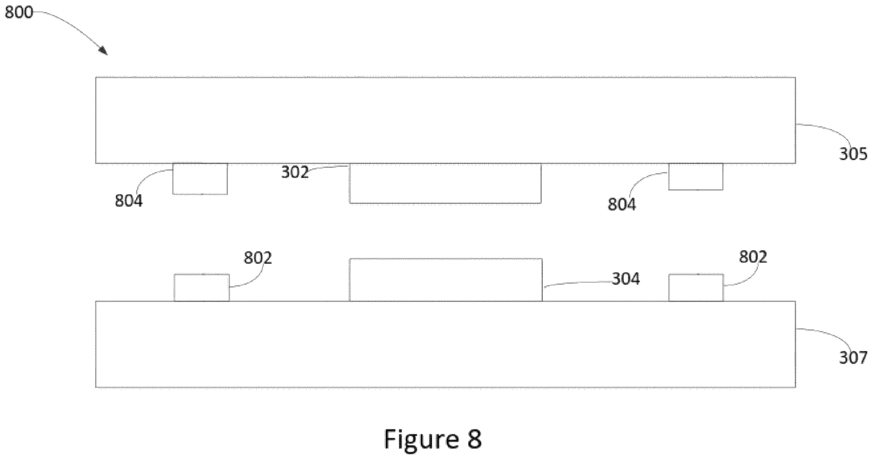

For example, Figure 7 shows another embodiment of a haptic actuation system 700 for a touch sensitive surface 305 according to another embodiment. In the example depicted in Figure 7, the haptic actuation system 700 includes a haptic actuation element that includes a coil 702, which can be configured in substantially the same manner as coil 306 of Figure 3. In this example, the coil 702 is only positioned or wrapped around the magnetic element 304. In some embodiments, the coil 702 can be positioned or wrapped around the magnetic element 302 and/or the magnetic element 304. As another example, Figure 8 shows another embodiment of a haptic actuation system 800 for a touch sensitive surface 305 according to another embodiment. In the example depicted in Figure 8, the haptic actuation system 800 can be a haptic actuation element that includes a first coil 802 and a second coil 804, each of which can be configured in substantially the same manner as coil 306. The first coil 802 is positioned or wrapped around the magnetic element 304 and the second coil 804 is positioned or wrapped around the magnetic element 302.

Returning to Figure 3, in some embodiments, the coil 306 can be coupled or attached to the inner surface 307 of the computing device associated with the touch sensitive surface 305. In this example, the coil 306 can also be coupled or attached to the touch sensitive surface 305. In some examples, the coil 306 may not be attached to the inner surface 307 or the touch sensitive surface 305. Rather, in some embodiments, the coil 306 can be positioned between the touch sensitive surface 305 and the inner surface 307.

In some embodiments, the coil 306 can be configured to receive a current or a drive signal or haptic signal that includes the current (e.g., from the haptic effect generation module 128 of Figure 1), which can be used to generate electromagnetic forces between the magnetic element 302 and the magnetic element 304. For example, the coil 306 can be used to generate attractive or repulsive magnetic forces or fields between the magnetic element 302 and the magnetic element 304. The attractive or repulsive magnetic forces can cause vertical or horizontal movement of the magnetic element 302 or the touch sensitive surface 305. In this example, moving the magnetic element 302 or the touch sensitive surface 305 vertically or horizontally can cause the haptic actuation system 300 to output one or more haptic effects (e.g., a vibration, a squeeze, or a poke) to the touch sensitive surface 305 based on the vertical or horizontal movement. In some embodiments, a user may perceive the haptic effect as the user touches or contacts the touch sensitive surface 305.

For example, the north pole of the magnetic element 302 can be aligned with the south pole of the magnetic element 304, which may induce an attractive force between the magnetic element 302 and the magnetic element 304 and drive the magnetic element 302 or the touch sensitive surface 305 in a vertical (e.g., downward) direction. In this example, the coil 306 can receive a drive signal that can cause a change in a polarity of the magnetic element 302 or the magnetic element 304 to generate a repulsive force between the magnetic element 302 and the magnetic element 304. As an example, the coil 306 can receive a current or drive signal that causes a polarity of the magnetic element 302 to change from a north polarity to a south polarity. In this example, changing the polarity of the magnetic element 302 causes a repulsive force between the magnetic element 302 and the magnetic element 304, which causes the magnetic element 302 and the touch sensitive surface 305 to move vertically (e.g., upward) based on the repulsive force. In some embodiments, a user of the computing device can perceive the vertical movement of the touch sensitive surface 305 as a haptic effect as the user touches the touch sensitive surface 305. While in this example, the north pole of the magnetic element 302 is aligned with the south pole of the magnetic element 304 to generate an attractive magnetic force or field and the coil 306 is used to change the polarity of the magnetic element 302 from a north polarity to a south polarity, the present disclosure is not limited to such configurations. Furthermore, in some examples, any number of coils 306 can be used to generate attractive or repulsive magnetic forces or fields between the magnetic element 302 and the magnetic element 304.

In some embodiments, the haptic actuation system 300 can include one or more sensors. The sensor can be coupled to the touch sensitive surface 305 and/or the magnetic element 302. The sensor may be configured in substantially the same manner as touch sensor 108 of Figure 1. For example, the sensor can include a touch sensor or a pressure sensor. The sensor may detect a touch on the touch sensitive surface 305 (e.g., when an object contacts the touch sensitive surface 305) and transmit one or more sensor signals associated with a detected touch or other information associated with the detected touch (e.g., a pressure, speed, location and/or direction of the touch). The sensor can transmit the sensor signal to a processor of the computing device (e.g., the processor 102 of Figure 1), which may determine the one or more haptic effects to be output by the haptic actuation system 300 based at least in part on the sensor signal.

While in this example, the haptic actuation system 300 includes magnetic element 302, magnetic element 304, and coil 306, the present disclosure is not limited to such configurations. Rather, in other examples, the haptic actuation system 300 can include any number of magnetic elements or coils that can be used to output one or more haptic effects to the touch sensitive surface 305. Further, while in this example, the coil 306 is depicted as supporting a gap or space between the touch sensitive surface 305 and the inner surface 307 of the computing device associated with the touch sensitive surface 305, the present disclosure is not limited to such configurations. Rather, in other examples, the coil 306 does not support a gap or space between the touch sensitive surface 305 and the inner surface 307.

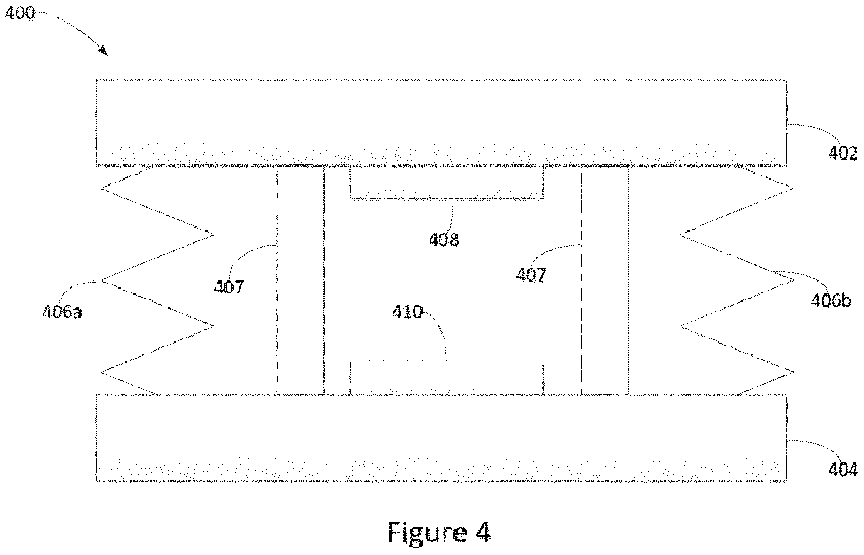

Figure 4 shows another embodiment of a haptic actuation system 400 for a touch sensitive surface 402 according to another embodiment. In some examples, the haptic actuation system 400 can be a haptic actuation element (e.g., the haptic actuation element 118 of Figure 1). In the example depicted in Figure 4, the touch sensitive surface 402 can be any touch sensitive surface (e.g., the touch sensitive surface 116 of Figure 1). The touch sensitive surface 402 may be coupled to one or more portions of a computing device (e.g., a portion of the computing device 101 of Figure 1). In this example, the touch sensitive surface 402 is also coupled to an inner surface 404 of the computing device (e.g., a surface, casing, housing, or inner portion of the computing device 101 of Figure 1). In some embodiments, the touch sensitive surface 402 can be coupled to the inner surface 404 of the computing device using any suitable method or technique. As an example, the touch sensitive surface 402 can be mounted on the inner surface 404 of the computing device. As another example, the touch sensitive surface 402 can be coupled to the inner surface 404 of the computing device via a coupler or a material 406a and another coupler or material 406b disposed between the touch sensitive surface 402 and the inner surface 404 of the computing device. In some examples, the coupler 406a and the coupler 406b can each be a deformable, flexible, or rigid material. Examples of the coupler 406a or the coupler 406b include, but are not limited to, a spring, tape, Poron®, VHB™ tape, silicon tape, silicone, rubber, or any suitable material. In such examples, a coupler 406a or coupler 406b for coupling the touch sensitive surface 402 to the inner surface 404 of the computing device can be selected based on a desired attribute, use, or application of the touch sensitive surface 402. As an example, a natural frequency of the touch sensitive surface 402 may vary depending at least in part on the type, thickness, surface area, etc. of the coupler 406a or the coupler 406b used to couple the touch sensitive surface 402 to the inner surface 404 of the computing device. Thus, in some instances, a particular material 406a or material 406b may be used to couple the touch sensitive surface 402 to the inner surface 404 of the computing device based at least in part on a desired natural frequency of the touch sensitive surface 402.

In another example, the coupler 406a or the coupler 406b can each be a magnetic element (e.g., the magnetic element 202 of Figure 1). In such examples, the coupler 406a can be positioned near the coupler 406b and the coupler 406a and coupler 406b can be positioned between the touch sensitive surface 402 and the inner surface 404 of the computing device to generate an attractive or repulsive force between the coupler 406a and the coupler 406b to couple the touch sensitive surface 402 to a portion of the computing device. For example, the coupler 406a can be attached to the touch sensitive surface 402 and the coupler 406b can be attached to the inner surface 404 and positioned near (e.g., opposite) the coupler 406a. The north pole of the coupler 406a can be aligned with the north pole of the coupler 406b, which may induce a repulsive force between the coupler 406a and the coupler 406b and drive the touch sensitive surface 402 in a vertical (e.g., upward direction) toward a portion of the computing device (not shown) to couple or attach the touch sensitive surface 402 to the portion of the computing device.

In the example depicted in Figure 4, the coupler 406a and coupler 406b are used to couple the touch sensitive surface 402 to the inner surface 404 of the computing device, which can cause the touch sensitive surface 402 to be suspended above the inner surface 404 of the computing device. As an example, the coupler 406a and coupler 406b can be positioned between the touch sensitive surface 402 and the inner surface 404 of the computing device to create a gap or space between the touch sensitive surface 402 and the inner surface 404 of the computing device.

In the example depicted in Figure 4, the haptic actuation system 400 also includes magnetic element 408 and magnetic element 410, each of which can be configured in substantially the same manner as respective magnetic element 202 and magnetic element 204 of Figure 2. For example, each of magnetic element 408 and magnetic element 410 can be any type of magnetic element (e.g., a magnet, a permanent magnet, an electromagnet, a ferromagnetic material, or any magnetic element or material). In some embodiments, magnetic element 408 can be a permanent magnet and magnetic element 410 can be a permanent magnet, an electromagnet, or any magnetic element. In some embodiments, the magnetic element 408 can be coupled to the touch sensitive surface 402 via any suitable method or technique. In some embodiments, the magnetic element 410 can be coupled to the inner surface 404 of the computing device and positioned proximate to the touch sensitive surface 402 or the magnetic element 408. As an example, the magnetic element 410 can be coupled to an internal portion of the computing device beneath the touch sensitive surface 402 (e.g., a test bed of the computing device) and opposite to the magnetic element 408. The magnetic element 408 and magnetic element 410 can be positioned proximate to each other to generate attractive or repulsive magnetic forces or fields. For example, the magnetic element 408 and the magnetic element 410 can be positioned or aligned with respect to each other to generate attractive or repulsive magnetic forces or fields between the magnetic element 408 and the magnetic element 410.

In some embodiments, the haptic actuation system 400 can also include a coil 407, which can be configured in substantially the same manner as coil 306 of Figure 3. In some embodiments, magnetic element 408 and magnetic element 410 can each be positioned proximate to the coil 407. For example, the coil 407 can be positioned proximate to magnetic element 408 or magnetic element 410 or wrapped around the magnetic element 408 or the magnetic element 410. In the embodiment depicted in Figure 4, the coil 407 is wrapped or positioned around the magnetic element 408 and the magnetic element 410. In some embodiments, the coil 407 may be positioned or wrapped around one of the magnetic element 408 or the magnetic element 410. As an example, the coil 407 may be configured in substantially the same manner as the coil 702 of Figure 7 (e.g., positioned or wrapped around the magnetic element 410). In another embodiment, the haptic actuation system 400 can include a first coil that can be positioned or wrapped around the magnetic element 408 and a second coil that can be positioned or wrapped around the magnetic element 410.

The coil 407 can be configured to receive a current or a drive or haptic signal that includes the current (e.g., from the haptic effect generation module 128 of Figure 1), which can be used to generate electromagnetic forces between the magnetic element 408 and the magnetic element 410. For example, the coil 407 can generate attractive or repulsive magnetic forces or fields between the magnetic element 408 and the magnetic element 410. The attractive or repulsive magnetic forces can cause vertical or horizontal movement of the magnetic element 408 or the touch sensitive surface 402 (e.g., cause the magnetic element 408 or the touch sensitive surface 402 to move vertically or laterally based on the attractive or repulsive forces). Moving the magnetic element 408 or the touch sensitive surface 402 vertically or horizontally can cause the haptic actuation system 400 to output one or more haptic effects (e.g., a vibration, a squeeze, or a poke) to the touch sensitive surface 402 based on the vertical or horizontal movement. In some embodiments, a user of the computing device may perceive the haptic effect as the user touches the touch sensitive surface 402.

For example, the north pole of the magnetic element 408 can be aligned with the north pole of the magnetic element 410, which may induce a repulsive force between the magnetic element 408 and magnetic element 410 and drive the magnetic element 408 or the touch sensitive surface 402 in a vertical (e.g., upward) direction. In some examples, the material 406a and the material 406b can support a gap or space between the touch sensitive surface 402 and the inner surface 404 of the computing device and the touch sensitive surface 402 may be suspended or float above the inner surface 404 of the computing device. In this example, the coil 407 can receive a haptic signal that can cause a change in a polarity of the magnetic element 408 or the magnetic element 410 to generate an attractive force between the magnetic element 408 and the magnetic element 410. As an example, the coil 407 can receive a current or drive signal that causes a polarity of the magnetic element 408 to change from a north polarity to a south polarity. In this example, changing the polarity of the magnetic element 408 causes an attractive force between the magnetic element 408 and the magnetic element 410, which causes the magnetic element 408 and the touch sensitive surface 402 to move vertically (e.g., downward) based on the attractive force. In this example, a user can perceive the movement of the touch sensitive surface 402 as a haptic effect as the user touches or contacts the touch sensitive surface 402.

While in this example, the north pole of the magnetic element 408 is aligned with the north pole of the magnetic element 410 to generate a repulsive magnetic force or field and the coil 407 is used to change the polarity of the magnetic element 408 from a north polarity to a south polarity to output the haptic effect, the present disclosure is not limited to such configurations. Rather, in other examples, the magnetic element 408 and the magnetic element 410 can be aligned according to any configuration and the coil 407 can be used to change the polarity of one or more of the magnetic element 408 or the magnetic element 410 to output a haptic effect to the touch sensitive surface 402. Further, while in this example, attractive or repulsive magnetic forces generated between the magnetic element 408 and the magnetic element 410 cause the magnetic element 408 or the touch sensitive surface 402 to move vertically or laterally based on the attractive or repulsive forces, the present disclosure is not limited to such configurations. Rather, in other examples, the attractive or repulsive magnetic forces generated between the magnetic element 408 and the magnetic element 410 can cause the magnetic element 410 or the inner surface 404 of the computing device to move vertically or laterally, which can cause the haptic actuation system 400 to output one or more haptic effects to the touch sensitive surface 402 based on the vertical or horizontal movement.

In some embodiments, the haptic actuation system 400 can include one or more sensors. The sensor can be coupled to the touch sensitive surface 402 and/or the magnetic element 408. The sensor may be configured in substantially the same manner as touch sensor 108 of Figure 1. For example, the sensor can include a touch sensor or a pressure sensor. The sensor may detect a touch on the touch sensitive surface 402 (e.g., when an object contacts the touch sensitive surface 402) and transmit one or more sensor signals associated with a detected touch or other information associated with the detected touch (e.g., a pressure, speed, location and/or direction of the touch). The sensor can transmit the sensor signal to a processor of the computing device (e.g., the processor 102 of Figure 1), which may determine the one or more haptic effects to be output by the haptic actuation system 400 based at least in part on the sensor signal.

While in this example, the haptic actuation system 400 includes magnetic element 408, magnetic element 410, material 406a, material 406b, and a coil 407, the present disclosure is not limited to such configurations. Rather, in other examples, the haptic actuation system 400 can include any number or configuration of magnetic elements, coils, deformable components or materials, or haptic actuators that can be used to output one or more haptic effects to the touch sensitive surface 402. Further, while in this example, the material 406a and the material 406b can support a gap or space between the touch sensitive surface 402 and the inner surface 404 of the computing device, the present disclosure is not limited to such configurations. Rather, in other examples, the material 406a and the material 406b do not support a gap or space between the touch sensitive surface 402 and the inner surface 404.

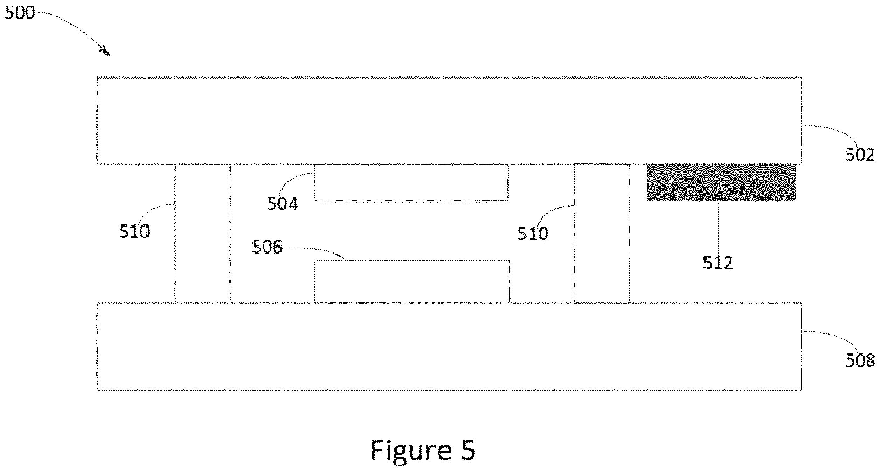

Figure 5 shows another embodiment of a haptic actuation system 500 for a touch sensitive surface 502 according to another embodiment. In some examples, the haptic actuation system 500 can be a haptic actuation element (e.g., the haptic actuation element 118 of Figure 1). In this example, the touch sensitive surface 502 can be any touch sensitive surface (e.g., the touch sensitive surface 116 of Figure 1). The touch sensitive surface 502 may be coupled to a portion of a computing device (e.g., a surface, casing, housing, or inner portion of the computing device 101 of Figure 1). In some embodiments, the touch sensitive surface 502 can be coupled to the portion of the computing device using any suitable method or technique.

In the example shown in Figure 5, the haptic actuation system 500 includes magnetic element 504 and magnetic element 506, each of which can be configured in substantially the same manner as magnetic element 202 or magnetic element 204 of Figure 2. For example, magnetic element 504 and magnetic element 506 can each be any type of magnetic element (e.g., a magnet, a permanent magnet, an electromagnet, a ferromagnetic material, or any magnetic element or material). In some embodiments, magnetic element 504 can be a permanent magnet and magnetic element 506 can be a permanent magnet, an electromagnet, or any magnetic element. In some embodiments, the magnetic element 504 can be coupled to the touch sensitive surface 502 via any suitable method or technique. As an example, the magnetic element 504 can be bonded or molded to a surface of the touch sensitive surface 502, embedded within the touch sensitive surface 502, or otherwise coupled to the touch sensitive surface 502.

In some embodiments, the magnetic element 506 can be coupled to an inner surface 508 of the computing device associated with the touch sensitive surface 502. For example, the inner surface 508 can be an inner portion of a casing, housing, or other inner portion of the computing device. In some embodiments, the magnetic element 506 can be coupled to the inner surface 508 of the computing device proximate to the touch sensitive surface 502 or the magnetic element 504. As an example, the magnetic element 506 can be coupled to the inner surface 508 of the computing device beneath the touch sensitive surface 502 (e.g., a test bed of the computing device) and opposite to the magnetic element 504. The magnetic element 504 and the magnetic element 506 can be positioned proximate to each other to generate attractive or repulsive magnetic forces or fields. For example, the magnetic element 504 and the magnetic element 506 can be positioned or aligned with respect to each other to generate attractive or repulsive magnetic forces or fields between the magnetic element 504 and the magnetic element 506. For example, the north pole of the magnetic element 504 can be aligned with the south pole of the magnetic element 506, which may induce an attractive force between the magnetic element 504 and the magnetic element 506 and drive the magnetic element 504 or the touch sensitive surface 502 in a vertical (e.g., downward) direction. In some examples, inducing an attractive force between the magnetic element 504 and the magnetic element 506 can lock the touch sensitive surface 502 in place (e.g., prevent the touch sensitive surface 502 from moving in a vertical or horizontal direction).

In some embodiments, the magnetic element 504 or magnetic element 506 may be configured to receive a haptic signal (e.g., from the haptic effect generation module 128 of Figure 1), which can polarize the magnetic element 504 or the magnetic element 506 and cause a haptic effect to be output to the touch sensitive surface 502. In one such embodiment, the magnetic element 504 or magnetic element 506 can receive a haptic signal, which can cause the magnetic element 504 or magnetic element 506 to have a north polarity or a south polarity that can induce an attractive or repulsive force between the magnetic element 504 and magnetic element 506 and cause vertical or horizontal movement of the magnetic element 504 or the touch sensitive surface 502 (e.g., cause the magnetic element 504 or the touch sensitive surface 502 to move vertically or laterally based on the attractive or repulsive forces). Moving the magnetic element 504 or the touch sensitive surface 502 vertically or horizontally can allow the haptic actuation system 500 to output one or more haptic effects (e.g., a vibration, a squeeze, or a poke) to the touch sensitive surface 502 based on the vertical or horizontal movement. In some embodiments, a user of the computing device may perceive the haptic effect as the user touches the touch sensitive surface 502. For example, the haptic signal can cause the magnetic element 504 to have a north polarity and cause the magnetic element 506 to have a north polarity, which can induce a repulsive force between the magnetic element 504 and the magnetic element 506 that can be perceived as a haptic effect (e.g., a bump, vibration, poke, etc.) as a user touches or contacts the touch sensitive surface 502. While in this example, a haptic signal causes magnetic element 504 and magnetic element 506 to each have a north polarity, the present disclosure is not limited to such configurations. Rather, in other examples, the magnetic element 504 and the magnetic element 506 can each receive a haptic signal that can cause a change in a polarity of the magnetic element 504 or the magnetic element 506.

In some embodiments, the haptic actuation system 500 can also include coil 510, which can be configured in substantially the same manner as coil 306 of Figure 3. The coil 510 can be coupled or attached to the inner surface 508 of the computing device associated with the touch sensitive surface 502. In this example, the coil 510 can also be coupled or attached to the touch sensitive surface 502. In some examples, the coil 510 may not be attached to the inner surface 508 or the touch sensitive surface 502. Rather, in some embodiments, the coil 510 can be positioned between the touch sensitive surface 502 and the inner surface 508. In some embodiments, the magnetic element 504 and the magnetic element 506 can each be positioned proximate to the coil 510. In the embodiment depicted in Figure 5, the coil 510 is wrapped or positioned around the magnetic element 504 and the magnetic element 506. In some embodiments, the coil 510 may be positioned or wrapped around one of the magnetic element 504 or the magnetic element 506. In another embodiment, the haptic actuation system 500 can include a first coil that can be positioned or wrapped around the magnetic element 504 and a second coil that can be positioned or wrapped around the magnetic element 506.

In some embodiments, the haptic actuation system 500 can also include a haptic actuator 512, which can be coupled to the touch sensitive surface 502. As an example, the touch sensitive surface 502 can be coupled to a haptic actuator 512 that is a linear resonant actuator (LRA) or solenoid resonance actuator (SRA). In the example depicted in Figure 5, the magnetic element 504, along with the haptic actuator 512, can be coupled to the touch sensitive surface 502 via any suitable method or technique.

In some embodiments, the coil 510 can be configured to receive a current or a haptic signal that includes the current (e.g., from the haptic effect generation module 128 of Figure 1), which can be used to generate electromagnetic forces between the magnetic element 504 and the magnetic element 506. For example, the coil 510 can generate attractive or repulsive magnetic forces or fields between the magnetic element 504 and the magnetic element 506. The attractive or repulsive magnetic forces can cause vertical or horizontal movement of the magnetic element 504 or the touch sensitive surface 502 and allow the haptic actuation system 500 to output one or more haptic effects (e.g., a vibration, a squeeze, or a poke) to the touch sensitive surface 502 based on the vertical or horizontal movement. In some embodiments, a user of the computing device may perceive the haptic effect as the user touches the touch sensitive surface 502.

For example, the north pole of the magnetic element 504 can be aligned with the south pole of the magnetic element 506, which may induce an attractive force between the magnetic element 504 and the magnetic element 506 and drive the magnetic element 504 or the touch sensitive surface 502 in a vertical (e.g., downward) direction. In some examples, inducing an attractive force between the magnetic element 504 and the magnetic element 506 can lock the touch sensitive surface 502 in place (e.g., prevent the touch sensitive surface 502 from moving in a vertical or horizontal direction). In this example, the coil 510 can receive a haptic signal that can cause a change in a polarity of the magnetic element 504 or magnetic element 506 to generate a repulsive force between the magnetic element 504 and the magnetic element 506. As an example, the coil 510 receives a current or drive signal that includes the current, which causes a polarity of the magnetic element 504 to change from a north polarity to a south polarity. In this example, changing the polarity of the magnetic element 504 causes a repulsive force between the magnetic element 504 and magnetic element 506, which causes the magnetic element 504 and the touch sensitive surface 502 to move vertically (e.g., upward) based on the repulsive force. In this example, the repulsive force can also cause the touch sensitive surface 502 to float, or be suspended, above the inner surface 508 of the computing device.

In some embodiments, the haptic actuator 512 may receive a haptic signal (e.g., from the haptic effect generation module 128 of Figure 1), which may cause the haptic actuator 512 to drive, displace, shift, adjust or otherwise move the touch sensitive surface 502 in a vertical or horizontal direction to output a haptic effect to the touch sensitive surface 502. For example, the haptic actuator 512 can be configured to receive the haptic signal and displace the touch sensitive surface 502 up, down, left, or right based on the haptic signal to output the haptic effect (e.g., a vibration, a squeeze, a poke, a change in a perceived coefficient of friction, a simulated texture, a stroking sensation, an electro-tactile effect, a surface deformation, etc.). In some embodiments, the haptic actuator 512 may drive the touch sensitive surface 502 to output the haptic effect to the touch sensitive surface 502 after the coil 510 receives a haptic signal that causes a change in a polarity of the magnetic element 504 or magnetic element 506 as described above (e.g., after the magnetic element 504 and the magnetic element 506 generate a repulsive magnetic force or field to cause the touch sensitive surface 502 to float, or be suspended above, the inner surface 508 of the computing device). In some embodiments, a user of the computing device may perceive the haptic effect as the user touches or contacts the touch sensitive surface 502. While in this example, the haptic actuation system 500 includes one coil 510, the present disclosure is not limited to such configurations. Rather, in other examples, any number of coils can be used to generate attractive or repulsive magnetic forces or fields between the magnetic element 504 and the magnetic element 506.

In some embodiments, the haptic actuation system 500 can include one or more sensors. The sensor can be coupled to the touch sensitive surface 502 and/or the magnetic element 504. The sensor may be configured in substantially the same manner as touch sensor 108 of Figure 1. For example, the sensor can include a touch sensor or a pressure sensor. The sensor may detect a touch on the touch sensitive surface 502 (e.g., when an object contacts the touch sensitive surface 502) and transmit one or more sensor signals associated with a detected touch or other information associated with the detected touch (e.g., a pressure, speed, location and/or direction of the touch). The sensor can transmit the sensor signal to a processor of the computing device (e.g., the processor 102 of Figure 1), which may determine the one or more haptic effects to be output by the haptic actuation system 500 based at least in part on the sensor signal.

While in this example, the haptic actuation system 500 includes magnetic element 504, magnetic element 506, coil 510, and a haptic actuator 512, the present disclosure is not limited to such configurations. Rather, in other examples, the haptic actuation system 500 can include any number of magnetic elements, coils, or haptic actuators that can be used to output one or more haptic effects to the touch sensitive surface 502. Furthermore, although in Figure 5, the haptic actuation system 500 comprises one haptic actuator 512, some embodiments may use any number of haptic actuators of the same or different types in sequence and/or in concert to produce haptic effects. Each haptic actuator 512 can be coupled to a portion of the touch sensitive surface 502. In one such embodiment, each portion of the touch sensitive surface 502 may be associated with at least one haptic actuator 512. In such embodiments, each haptic actuator 512 can output a haptic effect to a corresponding portion of the touch sensitive surface 502. As an example, a first haptic actuator can receive a first haptic signal (e.g., from the haptic effect generation module 128 of Figure 1) and output a first haptic effect to a first portion of the touch sensitive surface 502 based on the first haptic signal. A second haptic actuator can receive a second haptic signal and output a second haptic effect to a second portion of the touch sensitive surface 502 based on the second haptic signal. In some embodiments, the first haptic effect and the second haptic effect may be the same or different types of haptic effects. In this manner, one or more haptic actuators may be used to provide similar or different haptic effects to one or more portions of the touch sensitive surface 502. Further, while in this example, the coil 510 can support a gap or space between the touch sensitive surface 502 and the inner surface 508 of the computing device, the present disclosure is not limited to such configurations. Rather, in other examples, the coil 510 does not support a gap or space between the touch sensitive surface 502 and the inner surface 508.

### Illustrative Methods for Haptic Feedback for Providing Haptic Actuation for a Touch Sensitive Surface

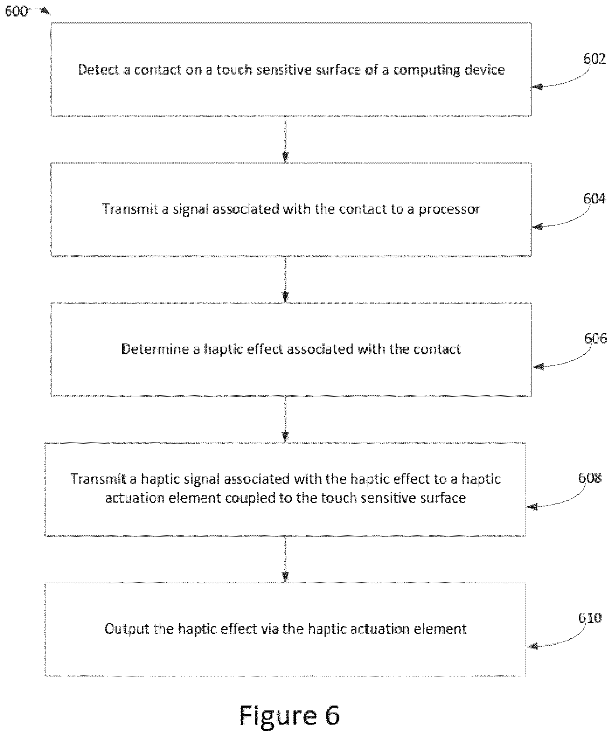

Figure 6 is a flow chart of steps for performing a method 600 for providing haptic actuation for a touch sensitive surface according to one embodiment. In some embodiments, the steps in Figure 6 may be implemented in program code that is executable by a processor, for example, the processor in a general purpose computer, a mobile device, or a server. In some embodiments, these steps may be implemented by a group of processors. In some embodiments, one or more steps shown in Figure 6 may be omitted or performed in a different order. Similarly, in some embodiments, additional steps not shown in Figure 6 may also be performed. The steps below are described with reference to components described above with regard to the system shown in Figure 1. While this example describes steps for performing a method 600 for providing haptic actuation for a touch sensitive surface, the present disclosure is not limited to touch sensitive surfaces. Rather, in some examples, the steps described in Figure 6 can be used to provide haptic actuation for any surface including, for example, any surface of a computing device or a portion of a casing or housing of the computing device.

The method 600 begins at step 602 when a touch sensor 108 detects a touch on a touch sensitive surface 116 of a computing device 101. In some embodiments, the touch sensor 108 can detect a contact or touch between an object (e.g., a user's hand, finger or skin, or a stylus) and a touch sensitive surface 116 of the computing device 101. In some examples, the touch sensor 108 may also detect a location, pressure, speed, and/or direction of the touch on the touch sensitive surface 116.

In some embodiments, the touch sensor 108 may include an ambient light sensor, a pressure sensor, a force sensor, a capacitive sensor, resistive sensor, a LED finger detector, etc. for detecting the contact.

The method 600 continues at step 604 when a signal associated with the contact is transmitted to a processor 102. In some embodiments, the touch sensor 108 transmits the signal associated with the touch to the processor 102. The signal can indicate a presence, absence, location, path, velocity, acceleration, pressure, or other characteristic of the contact.

The method 600 continues at step 606 when the processor 102 determines a haptic effect associated with the contact. In some examples, a haptic effect determination module 126 causes the processor 102 to determine the haptic effect. In some embodiments, the haptic effect can include one or more haptic effects.

For example, the processor 102 can determine the haptic effect (e.g., one or more vibrations) based at least in part on a signal received from the touch sensor 108 (e.g., in step 604). As an example, the signal may indicate that a user is in contact with the touch sensitive surface 116 (e.g., when the user's hand or skin is touching the touch sensitive surface 116 or when the user is touching the touch sensitive surface 116 with an object). The processor 102 may receive the signal and access a lookup table that includes data corresponding to a sensor signal, along with data indicating one or more haptic effects associated with one or more sensor signals. The processor 102 can select from the lookup table a haptic effect that corresponds to the contact with the touch sensitive surface 116. For example, in response to the user touching the touch sensitive surface 116, the processor 102 can select a haptic effect that includes a vibration and the vibration can be output to the user. As another example, the signal may indicate an amount of pressure of the user's contact with the touch sensitive surface 116 and the processor 102 may receive the signal, access a lookup table that includes various haptic effects, and select from the lookup table a haptic effect that corresponds to the amount of pressure of the user's contact with the touch sensitive surface 116. As an example, the processor 102 can select a haptic effect that includes a strong vibration in response to the amount of pressure of the user's contact with the touch sensitive surface 116 being above a pressure threshold.

In some embodiments, the processor 102 can determine the haptic effect based on an event. For example, the computing device 101 can receive an e-mail or a text message (e.g., from another computing device) and generate a notification based on the received e-mail or text message. The processor 102 can access a lookup table that includes various haptic effects and select a haptic effect that corresponds to a received e-mail or text message. In other embodiments, the processor 102 can determine one or more haptic effects based on one or more sensor signals and/or one or more events.

In some embodiments, in step 606, the processor 102 can determine a characteristic (e.g., a magnitude, duration, location, type, frequency, etc.) of the haptic effect based at least in part on a signal received from the touch sensor 108 (e.g., in step 604). For example, the sensor signal may indicate a location, path, velocity, acceleration, pressure and/or other characteristics of a contact with the touch sensitive surface 116. The processor 102 can determine a characteristic of the haptic effect based at least in part on the location, path, velocity, acceleration, pressure and/or other characteristics of the contact. As an example, the processor 102 can determine that the pressure of the contact is above a pressure threshold (e.g., when the user is pressing firmly on the touch sensitive surface 116). Based on this determination, the processor 102 can determine a strong or long haptic effect. As another example, the processor 102 can determine that the pressure of the contact is below the pressure threshold (e.g., when the user is pressing gently on the touch sensitive surface 116) and determine a weak or short haptic effect.

In some embodiments, in step 606, the processor 102 may determine one or more haptic actuation elements 118 to actuate, in order to generate or output the determined haptic effect. For example, a signal received from the touch sensor 108 may indicate a location of a user's touch on the touch sensitive surface 116 and the processor 102 can access a lookup table that includes data corresponding to various haptic effects, along with data corresponding to various haptic output devices for outputting each haptic effect and a location of each haptic output device. The processor 102 can select a haptic effect or a haptic actuation element 118 from the lookup table to output the haptic effect based on the location of the user's touch. As an example, the processor 102 may select one or more haptic effects from the lookup table based on the location of a touch in order to simulate the presence of a virtual object (e.g., a virtual piece of furniture, automobile, animal, cartoon character, button, lever, logo, or person) on a display 134 of the computing device 101, which the user may be interacting with via the touch sensitive surface 116 (e.g., by clicking on the virtual object). As another example, the processor 102 can select a haptic actuation element 118 that is located at the location of the user's touch.

The method 600 continues at step 608 when the processor 102 transmits a haptic signal associated with the haptic effect to a haptic actuation element 118 coupled to the touch sensitive surface 116. In some embodiments, the haptic effect generation module 128 causes the processor 102 to generate and transmit the haptic signal to the haptic actuation element 118.

The method 600 continues at step 610 when the haptic actuation element 118 coupled to the touch sensitive surface 116 outputs the haptic effect. In some embodiments, the haptic actuation element 118 receives the haptic signal from the processor 102 and outputs the haptic output effect to the touch sensitive surface 116 based on the haptic signal.

### General Considerations

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process that is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the invention. Also, a number of steps may be undertaken before, during, or after the above elements are considered. Accordingly, the above description does not bound the scope of the claims.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

Embodiments in accordance with aspects of the present subject matter can be implemented in digital electronic circuitry, in computer hardware, firmware, software, or in combinations of the preceding. In one embodiment, a computer may comprise a processor or processors. The processor comprises or has access to a computer-readable medium, such as a random access memory (RAM) coupled to the processor. The processor executes computer-executable program instructions stored in memory, such as executing one or more computer programs including a sensor sampling routine, selection routines, and other routines to perform the methods described above.

Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example tangible computer-readable media, that may store instructions that, when executed by the processor, can cause the processor to perform the steps described herein as carried out, or assisted, by a processor. Embodiments of computer-readable media may comprise, but are not limited to, all electronic, optical, magnetic, or other storage devices capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may comprise computer-readable media, such as a router, private or public network, or other transmission device. The processor, and the processing, described may be in one or more structures, and may be dispersed through one or more structures. The processor may comprise code for carrying out one or more of the methods (or parts of methods) described herein.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.

## Claims

1. A system (100, 200, 300, 400, 500, 700, 800) comprising:
a touch surface (116, 206, 305, 402, 502), the touch surface coupled to a housing of a computing device (101) via a coupler; and
a haptic actuation element (118) coupled to the touch surface and an inner surface (205, 307, 404, 508) within the housing, the haptic actuation element configured to output a haptic effect to the touch surface, the haptic actuation element comprising:
a first magnetic element (202, 302, 408, 504) coupled to one of the touch surface or the inner surface;
a second magnetic element (204, 304, 410, 506) coupled to the other of the touch surface or the inner surface, the second magnetic element positioned opposite to the first magnetic element to generate an attractive or repulsive force between the first and second magnetic elements; and
an electrical coil (306, 407, 510, 702, 802, 804) disposed around one or both of the first or second magnetic elements, wherein the electrical coil is configured to:
receive a current; and
generate an electromagnetic force between the first and second magnetic elements based on the current to output the haptic effect to the touch surface.

2. The system (100, 200, 300, 400, 500, 700, 800) of claim 1, wherein the haptic actuation element (118) further comprises a haptic actuator coupled to the touch surface (116, 206, 305, 402, 502), the haptic actuator configured to receive a haptic signal from a processor of the computing device (101) and drive the touch surface in a vertical or horizontal direction in response to the haptic signal to output the haptic effect to the touch surface; and, wherein optionally, the haptic actuator includes a linear resonant actuator (LRA), solenoid resonance actuator (SRA), or a piezoelectric actuator.

3. The system (100, 200, 300, 400, 500, 700, 800) of claims 1 or 2, wherein the haptic actuation element (118) comprises:
a first haptic actuation element coupled to a first portion of the touch surface (116, 206, 305, 402, 502), the first haptic actuation element configured to receive a first haptic signal associated with a first haptic effect and output the first haptic effect to the first portion of the touch surface; and
a second haptic actuation element coupled to a second portion of the touch surface, the second haptic actuation element configured to receive a second haptic signal associated with a second haptic effect and output the second haptic effect to the second portion of the touch surface.

4. The system (100, 200, 300, 400, 500, 700, 800) of any preceding claim, further comprising:
a memory (104); and
a processor (102) communicatively coupled to the memory and the touch surface (116, 206, 305, 402, 502), the processor configured to:
receive a signal associated with a contact on the touch surface;
determine the haptic effect based on the signal; and
transmit a haptic signal associated with the haptic effect to the haptic actuation element (118), the haptic signal including the current,
wherein the touch surface comprises a touch sensor (108) configured to detect the contact on the touch surface, the touch sensor further configured to transmit the signal associated with the contact on the touch surface to the processor.

5. The system (100, 200, 300, 400, 500, 700, 800) of claim 4, wherein the touch sensor (108) is further configured to detect a pressure of the contact and transmit data associated with the pressure to the processor (102), and wherein the processor is configured to determine a characteristic of the haptic effect based at least in part on the data associated with the pressure of the contact.

6. The system (100, 200, 300, 400, 500, 700, 800) of any preceding claim, wherein the coupler is configured to vary a natural frequency of the touch surface (116, 206, 305, 402, 502).

7. The system (100, 200, 300, 400, 500, 700, 800) of any preceding claim, wherein the electrical coil comprises a first electrical coil (804) disposed around the first magnetic element (202, 302, 408, 504) and a second electrical coil (802) disposed around the second magnetic element (204, 304, 410, 506).

8. A method comprising:
detecting a contact on a touch surface (116, 206, 305, 402, 502), the touch surface coupled to a housing of a computing device (101) via a coupler;
receiving, by a processor (102), a sensor signal associated with the contact;
determining, by the processor, a haptic effect based on the sensor signal;
transmitting, by the processor, a haptic signal associated with the haptic effect to a haptic actuation element (118) coupled to the touch surface and an inner surface (205, 307, 404, 508) within the housing, wherein the haptic actuation element comprises:
a first magnetic element (202, 302, 408, 504) coupled to one of the touch surface or the inner surface;
a second magnetic element (204, 304, 410, 506) coupled to the other of the touch surface or the inner surface, the second magnetic element positioned opposite to the first magnetic element to generate an attractive or repulsive force between the first and second magnetic elements; and
a first electrical coil (306, 407, 510, 702, 802, 804) disposed around one or both of the first or second magnetic elements, wherein the first electrical coil is configured to:
receive a current; and
generate an electromagnetic force between the first and second magnetic elements based on the current to output the haptic effect to the touch surface; and
outputting, by the haptic actuation element, the haptic effect to the touch surface.

9. The method of claim 8, wherein the haptic actuation element (118) comprises:
a first haptic actuation element coupled to a first portion of the touch surface (116, 206, 305, 402, 502), the first haptic actuation element configured to receive a first haptic signal associated with a first haptic effect and output the first haptic effect to the first portion of the touch surface; and
a second haptic actuation element coupled to a second portion of the touch surface, the second haptic actuation element configured to receive a second haptic signal associated with a second haptic effect and output the second haptic effect to the second portion of the touch surface.

10. A system (100, 200, 300, 400, 500, 700, 800) comprising:
a touch surface (116, 206, 305, 402, 502) coupled to a housing of a computing device (101); and
a haptic actuation element (118) coupled to the touch surface and an inner surface (205, 307, 404, 508) within the housing, the haptic actuation element configured to output a haptic effect to the touch surface, the haptic actuation element comprising:
a magnet (202, 302, 408, 504) coupled to one of the touch surface or the inner surface;
a magnetic element (204, 304, 410, 506) coupled to the other of the touch surface or the inner surface, the magnetic element positioned proximate the magnet to repel the magnet; and
a haptic actuator coupled to the touch surface, the haptic actuator configured to receive a haptic signal and output the haptic effect to the touch surface.

11. The system (100, 200, 300, 400, 500, 700, 800) of claim 10, wherein the haptic actuation element further comprises an electrical coil (306, 407, 510, 702, 802, 804) disposed around one or both of the magnet (202, 302, 408, 504) or the magnetic element (204, 304, 410, 506), wherein the electrical coil is configured to receive a current and generate a repulsive force between the magnet and the magnetic element.

12. The system (100, 200, 300, 400, 500, 700, 800) of claims 10 or 11, wherein the haptic actuation element comprises:
a first haptic actuation element coupled to a first portion of the touch surface (116, 206, 305, 402, 502), the first haptic actuation element configured to receive a first haptic signal associated with a first haptic effect and output the first haptic effect to the first portion of the touch surface; and
a second haptic actuation element coupled to a second portion of the touch surface, the second haptic actuation element configured to receive a second haptic signal associated with a second haptic effect and output the second haptic effect to the second portion of the touch surface.

13. The system (100, 200, 300, 400, 500, 700, 800) of any of claims 10-12, further comprising:
a memory (104); and
a processor (102) communicatively coupled to the memory and the touch surface (116, 206, 305, 402, 502), the processor configured to:
receive a signal associated with a contact on the touch surface;
determine the haptic effect based on the signal; and
transmit the haptic signal associated with the haptic effect to the haptic actuation element (118).

14. The system (100, 200, 300, 400, 500, 700, 800) of claim 13, wherein the touch surface (116, 206, 305, 402, 502) comprises a touch sensor (108) configured to detect the contact on the touch surface, the touch sensor further configured to transmit the signal associated with the contact on the touch surface to the processor (102).

15. The system (100, 200, 300, 400, 500, 700, 800) of claim 14, wherein the touch sensor (108) is further configured to detect a pressure of the contact and transmit data associated with the pressure to the processor, and wherein the processor (102) is configured to determine a characteristic of the haptic effect based at least in part on the data associated with the pressure of the contact.
